# EUROPEAN PATENT APPLICATION

(11) **EP 0 662 339 A2**
(43) Date of publication of application: **12.07.1995**
(21) Application number: 95300096.5
(22) Date of filing: 09.01.1995
(51) Int. Cl.: B01D 53/86, B01D 53/00

(54) **A method for removing water from gases**

(30) Priority: 07.01.1994 JP 23018/94
(71) Applicant: Osaka Sanso Kogyo KK, 4-Chome, Yodogawa-ku Osaka 532 (JP)
(72) Inventor: Nakamura, Masakazu, Kawagoe-shi, Saitama (JP); Kijima, Takahiko, Tsurugashima-shi, Saitama (JP); Makihara, Kouji, Sakado-shi, Saitama (JP); Ohoki, Atsushi, Sakado-shi, Saitama (JP); Hayasi, Shigeki, Sakai-shi, Osaka (JP)
(74) Representative: Bousfield, Roger James

(57) **Abstract**

A method of removing water from a special gas having water associated therewith, comprising the step of:
i) introducing the special gas into a dissociation zone;
ii) dissociating the water from said special gas to form a substantially water-free special material gas; and
iii) separating the dissociated water from the substantially water-free special gas.

## Description

The present invention relates to a method of removing residual water from special gases used in the semiconductor industry.

Special gases such as SiH₄, Si₂H₆, SiHCl₃, SiCl₄, AsF₅, PF₃, PF₅, NF₃, SF₄, WF₆, HF, AsH₃, PH₃, NH₃, HBr, BCl₃, HCl, SiH₂Cl₂ and BF₃ are widely used in the semiconductor gases. Arsine (AsH₃) and phosphine (PH₃) in particular are widely used in the semiconductor production industry. As a result of the recent complication and miniaturisation of semiconductors, the spaces existing between individual conductors of a semiconductor are in the range of submicrons. Hence, if such special gases contain water, short circuiting of a semiconductor occurs. Therefore, it is necessary to decrease the water content of special gases to about one parts per billion (1 ppb) or less.

Techniques of removing the water content from such special gases including the development of adsorbents have made great advances.

However, for reasons unknown even such advanced techniques cannot remove the water content from the gases down to 1 ppb or less.

The present invention is based on the discovery that the water content, particularly at such low levels, is associated with the special gas, in particular that water molecules associated with a special gas can be dissociated from the special material gas according to a catalyst method, an ultrasound method, a high frequency method, an ultraviolet rays method and an infrared rays method.

Accordingly, the present invention relates to a method of removing water content from the special material gas said method of removing water content from the special material gas being characterised by comprising:
i) a step of introducing the special gas into a dissociation zone, for example a chamber or pipe,
ii) a step of dissociating from the special gas the water molecule associated with the special gas and
iii) a step of separating the dissociated water molecule from the special gas.

Special material gases in the present invention include, for example, SiH₄, Si₂H₆, SiHCl₃, SiCl₄, AsF₅, PF₃, PF₅, NF₃, SF₄, WF₆, HF, AsH₃, PH₃, NH₃, HBr, BCl₃, HCl, SiH₂Cl₂ and BF₃.

In accordance with the invention, the dissociation of a water molecule associated with a special gas can be performed according to the following methods:
i) Dissociating the associated water molecule selectively from the special gas by means of a dissociation chamber or a dissociation pipe in the presence of a catalyst at a relatively low temperature, for example, at 50°C to 500°C, so as to minimise thermal decomposition of the special gas.
ii) Applying ultrasonic waves, for example, at a frequency of 10 Mhz or more, to the special gas.
iii) Applying a high frequency to the special gas.
iv) Applying ultraviolet (UV) rays to the special gas.
v) Applying infrared (IR) rays to the special gas.

Generally, the above treatments are preferably performed for three minutes or more, advantageously for three to five minutes.

Generally, with a view to preventing the dissociated water molecule from being re-associated with the special gas, a chamber of a metallic material with which the water molecules can react, for example Al, Cu or Si, is provided downstream of the dissociation zone and the dissociated water reacts with the material to form, for example, an oxide of the metal.

Alternatively or in addition, an adsorption chamber filled with an adsorbent such as a zeolite may be provided downstream of the dissociation zone. Equally, water may be removed by other methods including distillation techniques under such conditions that the water and the special gas are not re-associated thereafter.

The process of adsorption may generally be performed as a single or as a multistage method.

Since the dissociation of the associated water molecule from a special material gas can be performed at relatively low temperatures in accordance with the invention, decomposition of the special gas is avoidable.

For a better understanding of the invention, reference will now be made, for the purpose of exemplification only, to the following examples and to the accompanying drawings in which:

Figure 1 is an analysis schematic view for observing the associated water molecule in Example 1.

Figure 2 is a graph of the results of measuring the associated water molecule dissociated in Example 1.

Figure 3 is a graph of the results of evaluation as to whether or not dissociation of the associated water molecule is relevant to the reaction theory.

Figure 4 is a schematic view of the removal and purification of the dissociated water content in Example 2.

Figure 5 is an analysis schematic view for measuring the concentration of water content in Example 2.

Figure 6 is a graph of the results of measuring the concentration of water content in Example 2.

Figure 7 is an analysis schematic view of the evaluation of an optimum temperature for dissociating the associated water molecule in Example 3.

Figure 8 is a graph of the results of measuring the decomposition of the special material gas and the dissociated water content in Example 3.

Figure 9 is a schematic view of the purification in Example 4.

Figure 10 is a schematic view of the purification in Example 4.

Figure 11 is an analysis schematic view for measuring the concentration of the associated water content in the special material gas prepared according to the purification in Example 4.

Figure 12 is a graph of the results of measurement in Example 4.

Figure 13 is a schematic view of the purification in Example 5.

Figure 14 is an analysis schematic view for measuring the concentration of the associated water content in the special material gas prepared according to the purification in Example 5.

Figure 15 is a graph of the results of measurement in Example 5.

Figure 16 is an analysis schematic view for the removal of the associated water molecule in Example 6.

Figure 17 is a graph of the results of measuring the associated water molecule dissociated in Example 6.

Figure 18 is a schematic view of the removal of the dissociated water content in Example 7.

Figure 19 is an analysis schematic view for measuring the concentration of water content in Example 7.

Figure 20 is a schematic view of the removal of the dissociation water content in Example 8.

Figure 21 is an analysis schematic view for measuring the concentration of water content in Example 8.

Figure 22 is an analysis schematic view for the removal of the associated water molecule in Example 9.

Figure 23 is a graph of the results of measuring the associated water molecule dissociated in Example 9.

Figure 24 is a schematic view of the removal of the dissociated water content in Example 10.

Figure 25 is an analysis schematic view for measuring the concentration of water content in Example 10.

### Example 1

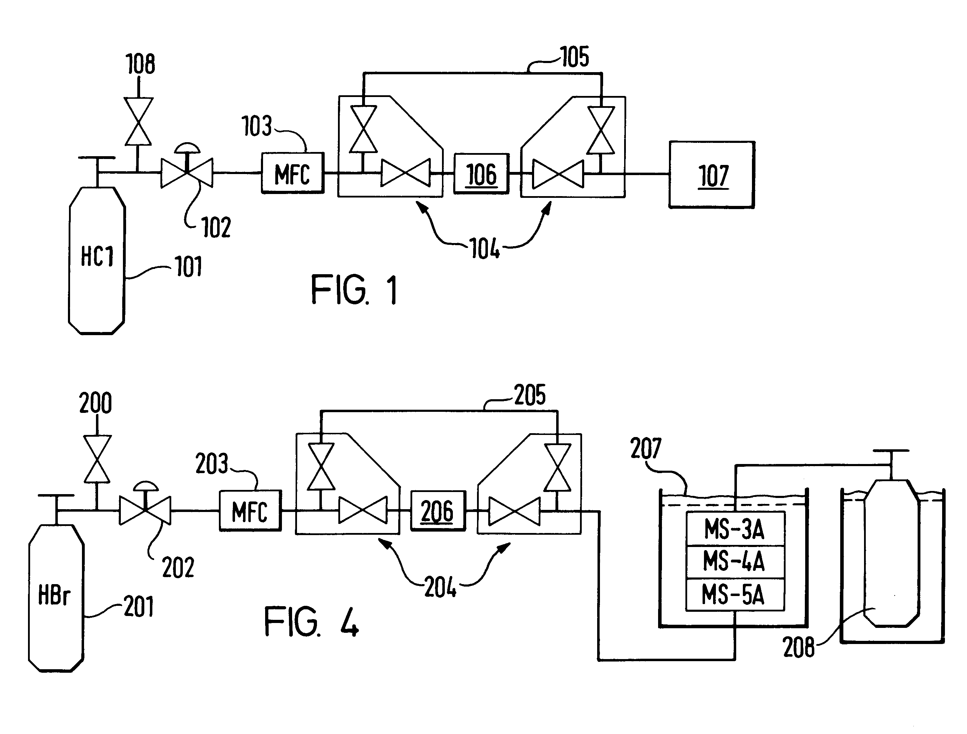

This example refers to the fact that water molecules associated with special gas molecules. Figure 1 shows schematically a gas cylinder 101 filled with 100% HCl gas purified according to a conventional method and containing associated water molecules, but also a small non-associated water content.

The pressure of the HCl gas was adjusted by a regulator 102 and the flow of the HCI gas was adjusted by a mass flow controller 103. When the HCl gas passes through a dissociated chamber 106, the associated water molecule in the gas was dissociated. When the HCl gas passed through a by-pass 105, the associated water molecule in the gas was not dissociated.

Nitrogen gas was provided at 108 for the purpose of purging the system before the start of analysis and after the analysis has been completed.

The pressure of HCl gas was regulated to 2Kg/cm² by a regulator 102, the flow was varied to 200, 100 and 50 cc/min by means of a mass flow controller 103, and the water concentration of the gas was measured by means of an analyser 107 after it passed through either the by-pass 105 (in this case, the associated water molecule not being dissociated) or the dissociation chamber 106 heated to 100°C for dissociating water molecules from the special gas molecules.

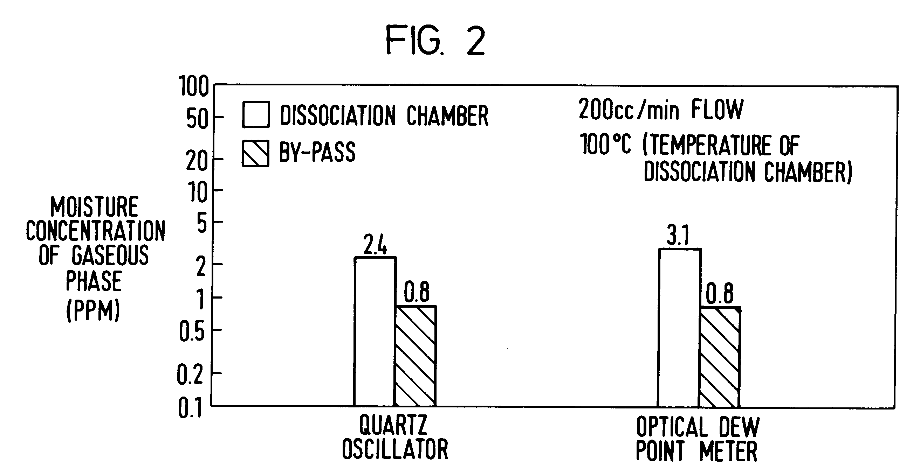

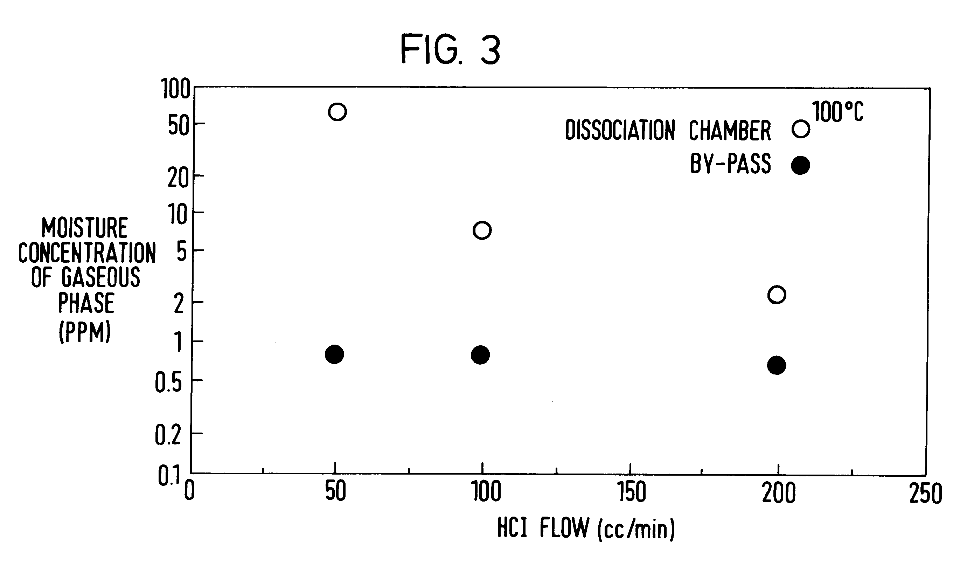

The results are shown in Figure 2. When the HCl gas passed through the dissociated chamber 106, the dissociated water was detected by the analyser 107, whereas when the HCl gas passed through the by-pass 105, no associated water molecules were detected. Therefore, the water in the former case is more than that in the latter case as shown in Figure 2. Figure 3 shows the relationship between the moisture concentration of gaseous phase and HCl flow with time. When the HCl gas passed through the dissociation chamber 107, the HCl flow changed with time. Whereas when the HCl gas passed through the by-pass 105, the HCl flow did not change with time. This means that the analyser did not detect the non-dissociated water molecule.

Though HCl was used in the above example, the results showed that the reaction rate theory can be applied to gases such as HBr, SiH₄, Si₂H₆, SiH₂ Cl₂, SiHCl₃, SiCl₄, AsH₃, AsF₅, PH₃, PF₃, PF₅, NH₃, NF₃, BF₃, BCl₃, SF₄, WF₆ and HF.

It has been calculated that the dissociation energy of water molecules from all the above special gases is of the order of 1 kJ/mol to 100 kJ/mol and smaller than an ion bond.

### Example 2

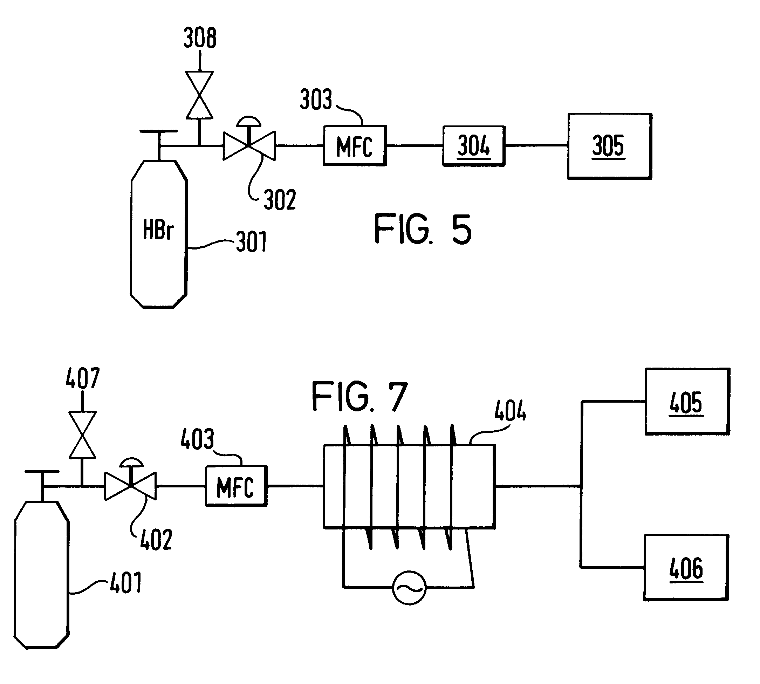

This example shows the difference in the water concentration between a purified product obtained by dissociating a water molecular associated with the HBr gas molecule through a heated dissociation pipe and thereafter removing the dissociated water molecule by means only of a low-temperature adsorption purification; a schematic view of the purification is shown in Figure 4.

The pressure of the HBr gas is adjusted by a regulator 202 and the flow the HBr gas is adjusted by a mass flow controller 203. When the HBr gas passes through a dissociation chamber 206, the associated water molecule in the gas is dissociated whereas when the HBr gas passes through a by-pass 205, the associated water molecule in the gas is not dissociated. After the HBr gas passes through the dissociation chamber 206 or through the by-pass 205, the gas then passes through an adsorbent bed 207 filled with molecular sieves 3A, 4A and 5A, and then is stored in cylinder 208 maintained at minus 70°C. Again, nitrogen gas supplied at 108 for purging is used in the system.

The water content concentration in the vapour phase of a purified product obtained by supplying the gas into a low-temperature adsorption device at normal temperature and purifying it was within about 0.1 ppm of the limit of detection according to the results of measurement by FT-IR, and the vapour-phase water content concentration of a purified product obtained by supplying the gas into a low-temperature adsorption device through a heated dissociation pipe and purifying it was the same.

However, a sample passed through a dissociated chamber in which water molecules associated with the gas sample were dissociated and another sample passed through a by-pass, ie associated water molecules not being dissociated, were supplied into the dissociation chambers heated to 80°C at a flow of 50, 100, 150 and 200 cc/min and water concentrations were measured by means of FT-IR. In Figure 5 is shown an analysis schematic view. As shown in Figure 5, each of 100% HBr gas samples purified according to the two kinds of methods ( i) only low-temperature adsorption purification and ii) the associated water molecule dissociated by the dissociation pipe and subjected to low-temperature adsorption purification) was analysed by means of an analyser 305 (FT-IR) measuring the vapour-phase water content concentration of HBr gas through a dissociation chamber 304 heated to 80°C, through a regulator 302 for making the pressure of HBr gas constant, using a mass flow controller 303 for supplying HBr into the analyser at a constant flow. Nitrogen at 306 is used for purging the system before and after the analysis.

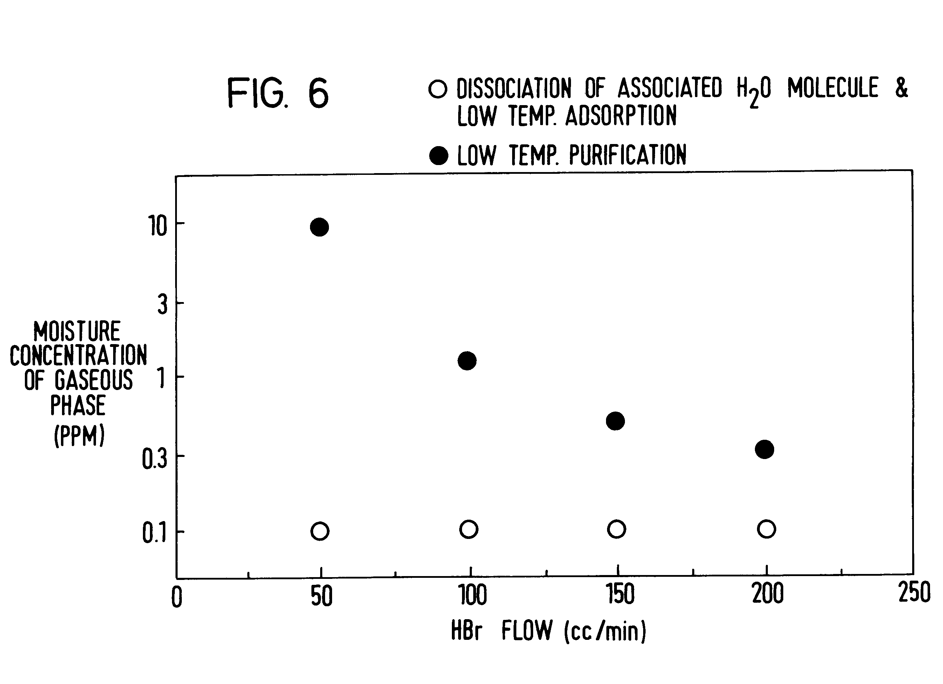

The results of varying the flow of HBr purified according to the two kinds of methods to 50, 100, 150 and 200 cc/min and performing measurement by means of FT-IR are shown in Figure 6. No change of a water content concentration according to the change of the flow was observed in a purified product obtained by introducing the gas into a low-temperature adsorption device through a heated dissociation chamber and purifying it, ie the sample from which the associated water molecule was dissociated.

In a sample subjected only to low-temperature adsorption purification without passing through a dissociation chamber, however, the vapour-phase water content concentration of flowed HBr was 9.2 ppm at a flow of 50 cc/min, 1.2 ppm at a flow of 100 cc/min, 0.48 ppm at a flow of 150 cc/min and 0.31 ppm at a flow of 200 cc/min; thus, as a flow became less, the more rise of a water content concentration was observed.

As is apparent from the above, the water content dissociated from the special material gas in the dissociation chamber was removed according to low-temperature adsorption purification to obtain high-quality HBr.

Though HBr was used in the above example, the same water content-removing performance could be obtained in special gases such as HCl, SiH₄, Si₂H₆, SiH₂Cl₂, SiHCl₃, SiCl₄, AsH₃, AsF₅, PH₃, PF₃, PF₅, NH₃, NF₃, BF₃, BCl₃, SF₄, WF₆ and HF by removing the water molecule associated with the special gas molecules by means of the invention.

### Example 3

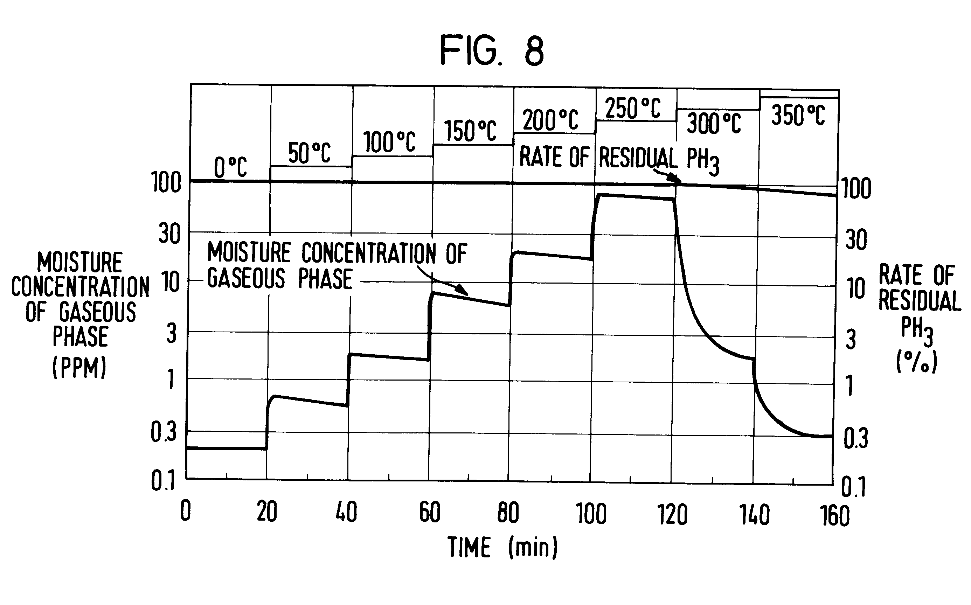

This example is an instance of observing the effect of the dissociation of the associated water content and the residual amount of PH₃ (non-heat-decomposition amount) by introducing PH₃ gas purified according to a conventional method into a heated stainless chamber; an analysis schematic view thereof is shown in Figure 7.

As shown in Figure 7, a quartz oscillator-type moisture meter 405 is shown to measure increasing water content, together with a gas-chromatograph (TCD) 406 to measure the concentration of PH₃ by allowing a gas cylinder 401 filled with 100% PH₃ gas containing associated water molecules to pass through a stainless steel dissociation chamber 404 capable of controlling temperature from 50 to 350°C, through a regulator 402 for making the pressure of PH₃ gas constant and using a mass flow controller for purifying PH₃ at a constant flow. Nitrogen gas at 407 is provided for purging the system before and after the analysis.

The results of making the flow of PH₃ (purified according to conventional methods) constant at 500 cc/min, varying a heating temperature of the stainless steel chamber to room temperature, 50, 100, 150, 200, 250, 300 and 350°C, maintaining the PH₃ gas at each temperature for 20 minutes and observing the concentration of the dissociated water content and the residual ratio of PH₃ (non-heat-decomposition ratio) are shown in Figure 8.

The water content concentration was 0.2 ppm at room temperature, 0.5 ppm at 50°C, 1.7 ppm at 100°C, 6.4 ppm at 150°C, 20.5 ppm at 200°C, 77.5 ppm at 250°C, 2.4 ppm at 300°C and 0.3 ppm at 350°C. The residual ratio of PH₃ was 100% at room temperature to 250°C, 98% at 300°C and 91% at 350°C, showing that heat decomposition started according to heating beyond 300°C. The concentration of the dissociated water content decreases according to the start of heat-decomposition of PH₃. It can be anticipated that the decomposed PH₃ and the dissociated water content react. In this case, it is water content in PH₃ (including the associated water content) that becomes obstructive in the semiconductor industry, and it becomes obstructive by no means in the semiconductor industry that some of PH₃ decomposes and that decomposition products react with water to form other materials. Hence, the temperature of a dissociation chamber or a dissociation pipe may be raised to 250°C or more; however, PH₃ decomposes at 250°C or more and it is desirable to dissociate an associated water molecule from a special material gas at a temperature of 250°C or less.

### Example 4

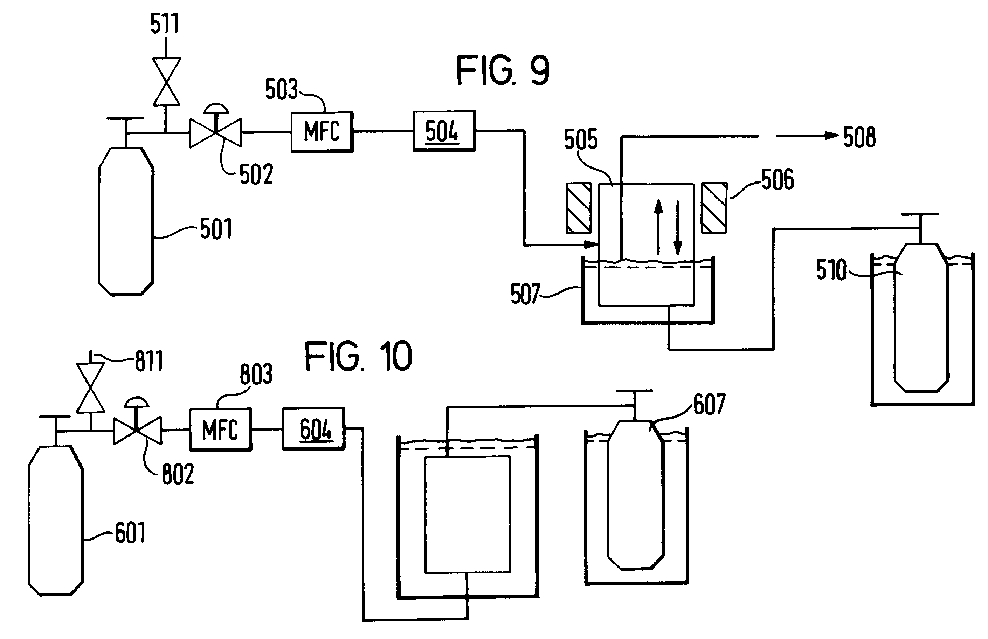

This example is an instance of dissociating a water molecule associated with a gas molecule by means of a dissociation chamber by employing distillation as a method of removing and purifying the dissociated water content and a schematic view of the purification is shown in Figure 9. As shown in Figure 9, the purification of BCl₃ was performed by passing a cylinder 501 filled with 100 BCl₃ material through a dissociation pipe 504 heated to 100°C, through a regulator 502 for making the secondary pressure of BCl₃ gas constant, using a mass flow controller 503 for purifying BCl₃ at a constant flow, and then supplying it into a distillation device 505. The BCl₃ gas introduced into the distillation device 505 was cooled to 10°C by means of a cooler 506 to liquify, and then heated to 50°C by means of a heater 507 to gasify, and only BCl₃ was liquefied by the cooler 506 again and impurities including water content were exhausted from the line of 508. A low-pressure cylinder 510 cooled with a cooling medium 509 was charged with the liquefied BCl₃ with a high purity to produce purified BCl₃. Nitrogen gas is supplied at 508 for purging the system before and after the purification.

The present example is an instance of dissociating a water molecule bound to a gas molecule by employing distillation as a method of removing and purifying the dissociation water content, and a schematic view of the purification is shown in Figure 10. As shown in Figure 10, the production of purified BCl₃ was performed by passing a cylinder 601 filled with 100 BCl₃ material through a dissociation pipe 604 heated to 100°C, through a regulator 602 for making the secondary pressure of BCl₃ gas constant, using a mass flow controller 603 for purifying BCl₃ at a constant flow, supplying it into a low-temperature adsorption device 605 set to 15° and allowing a low-pressure cylinder 607 cooled with a cooling medium to be charged with the gaseous BCl₃ with a high purity. Nitrogen gas is provided at 608 for purging the system before and after the purification.

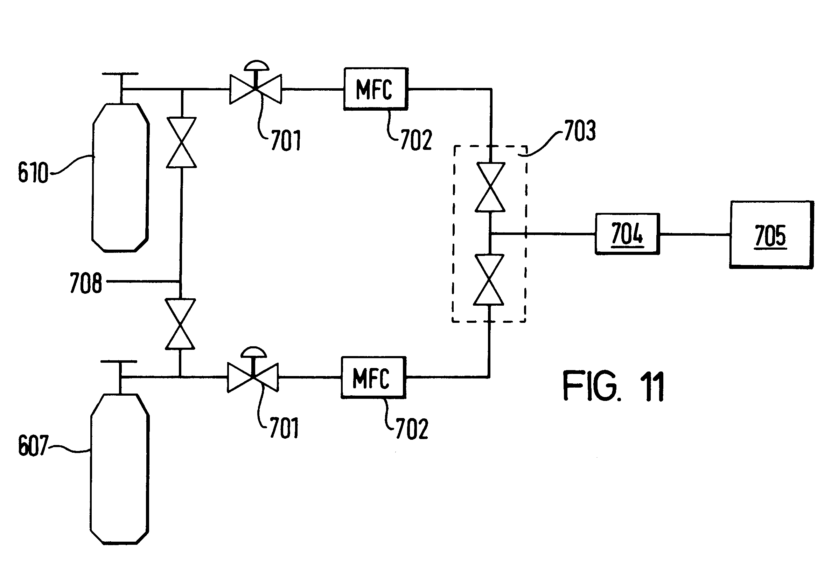

After the dissociation of the water molecule, water content concentrations of BCl₃ 510 purified according to distillation and BCl₃ 607 purified according to low-temperature purification were measured. BCl₃ 510 and BCl₃ 607 purified according to the above two kinds of methods were supplied into a dissociation chamber at a flow of 50, 00, 150 and 200 cc/min and water content concentrations were measured by means of FT-IR. An analysis schematic view thereof is shown in Figure 11. As shown in Figure 11, the analysis of BCl₃ was performed by passing purified 100% BCl₃ 510 and BCl₃ 607 through a valve 703 for selecting BCl₃ gas of 510 or 607 and supplying it into an analyser, through a regulator 701 for making the secondary pressure of BCl₃ gas constant, using a mass flow controller 702 for supplying BCl₃ gas at a constant flow, by means of an analyser 705 (FT-IT) measuring the concentration of the vapour-phase water content of BCl₃ gas through a dissociation pipe 704 heated to 100°C. N₂ gas is provided at 706 for purging the system before and after the analysis.

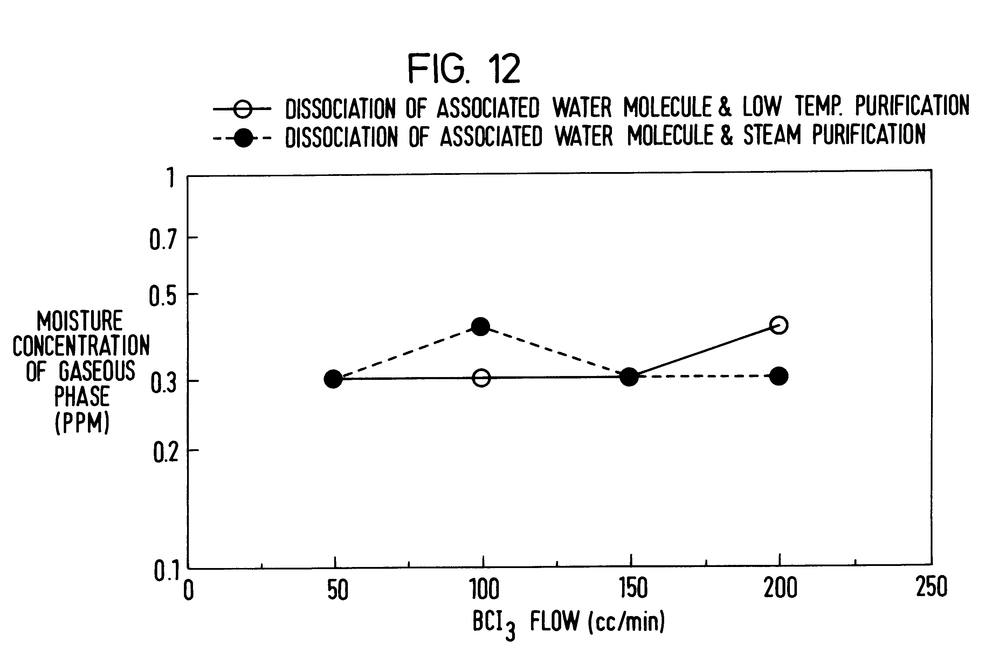

The results of measuring the concentrations of water content occurring according to steam purification 510 and low-temperature purification 607 by supplying BCl₃ into a dissociation pipe heated to 100°C at a flow of 50,100, 150 and 200 cc/min are shown in Figure 12.

No change in the concentration of water content according to the change of a flow was observed in either the gas subjected to low-temperature adsorption purification by means of a dissociation chamber heated to 100°C or the gas subjected to steam purification by means of a dissociation pipe heated to 100°C, and a constant water concentration of 0.3 ppm was observed. It reveals that low temperature adsorption purification and steam purification have the equal purification ability as a method of purifying water dissociated from a special material gas water molecule by means of a dissociation chamber.

### Example 5

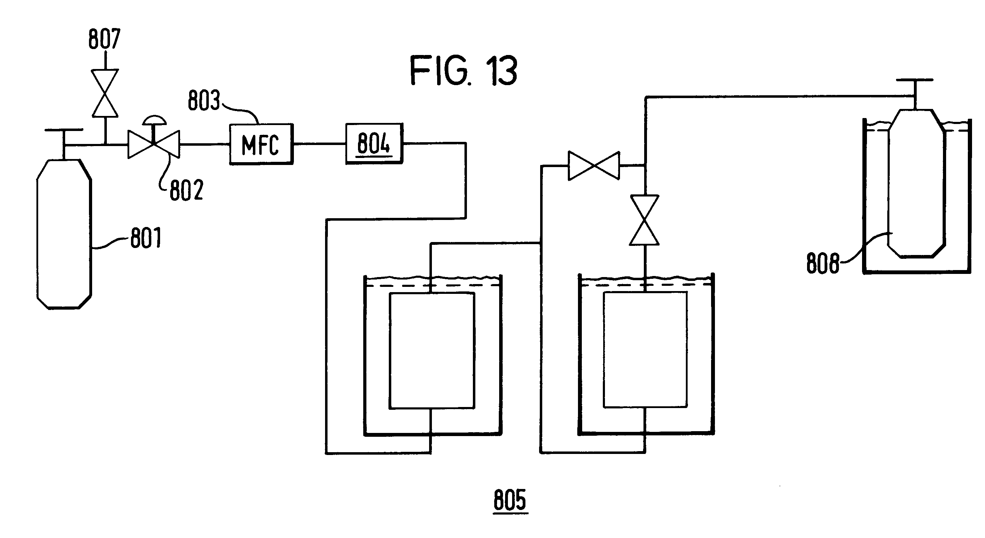

This example is an instance of dissociating a water molecule bound to an AsH₃ gas molecule by means of a heated dissociation pipe and removing the dissociated water according to one-stage or two-stage low temperature purification, and a schematic view of the purification is shown in Figure 13. As shown in Figure 13, a water content naturally exists in the vapour phase and a gas cylinder 801 filled with 100 AsH₃ gas containing associated water molecules was supplied into a one-stage or two-stage adsorber 805 cooled to minus 20°C via a dissociation pipe 804 heated to 100°C, a regulator 802 for making the secondary pressure of AsH₃ gas constant and using a mass flow controller 803. After passing through the adsorber 805, the AsH₃ passed to the cylinder 801 cooled to minus 70°C. Nitrogen gas was supplied at 807 for purging the system before and after the purification.

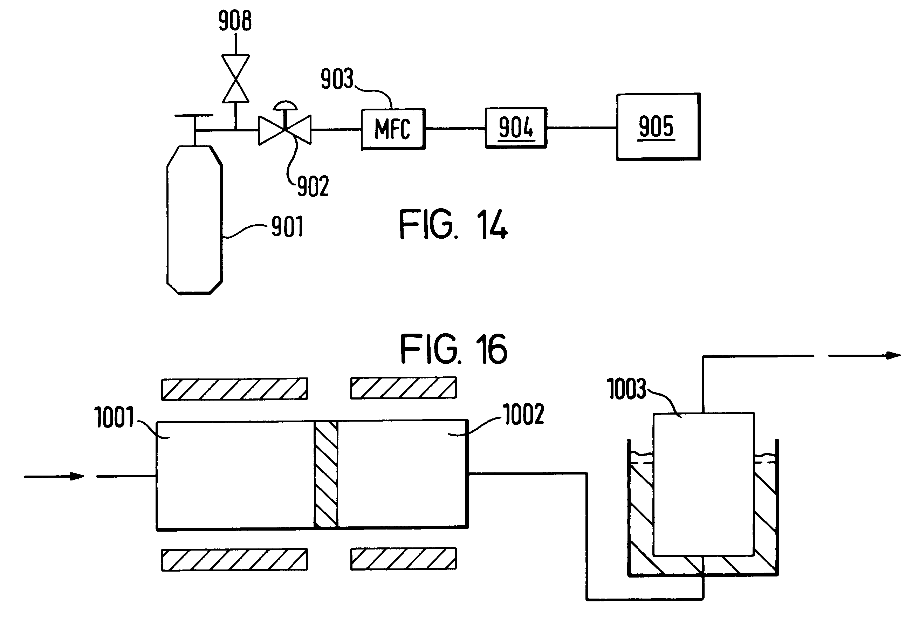

The example measures the concentration of water in AsH₃ purified by means of a one-stage or two-stage adsorbent. The purified AsH₃ was supplied into a dissociation pipe heated to 100°C at a flow of 50, 100, 150 and 200 cc/min and the concentration of water was measured by means of a quartz oscillator-type moisture meter. An analysis schematic view thereof is shown in Figure 14. As shown in Figure 14, this is an instance of measuring the concentration of water in 100% AsH₃ 901 purified by means of a one-stage or two-stage absorbent, through a regulator 902 for making the secondary pressure of AsH₃ gas constant, using a mass flow controller 902 for purifying AsH₃ at a constant flow. Nitrogen gas is supplied at 906 for purging the system before and after the analysis.

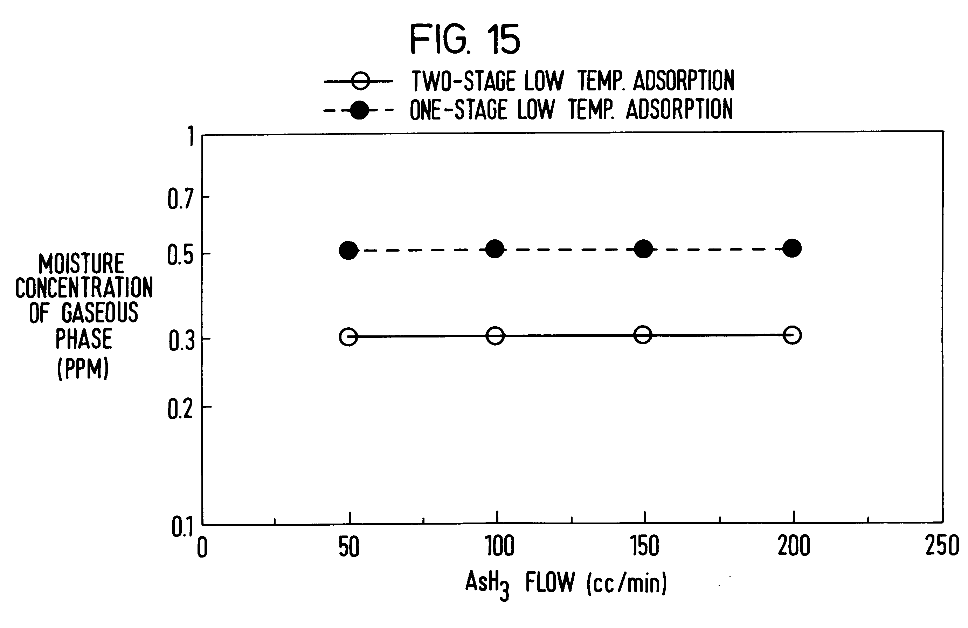

The results of supplying AsH₃ into a dissociation pipe of 100°C at a flow of 50, 100, 150 and 200 cc/min and measuring the concentration of occurring water content by means of a quartz oscillator-type moisture meter are shown in Figure 15.

The concentration of water of AsH₃ purified by means of a one-stage adsorbent is about 0.5 ppm at every flow, and the concentration of water of AsH₃ purified by means of a two-stage adsorbent is about 0.3 ppm at every flow. It reveals that water-removing performance can be improved by increasing the stages of an adsorbent in low-temperature adsorption purification.

### Example 6

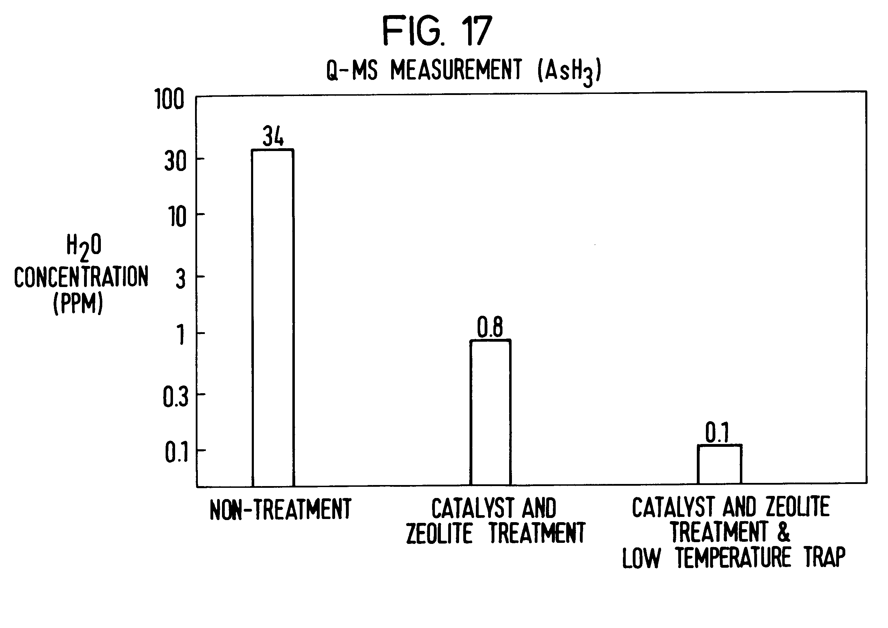

This example shows the dissociation of a water molecule associated with an AsH₃ gas molecule by means of a dissociation pipe containing a platinum (Pt) catalyst, passing the dissociated water through a zeolite heated to about 200°C or more so that the dissociated water should not be reassociated, and further removing water according to a low-temperature adsorption method, and a schematic view of the purification is shown in Figure 16. A 100% AsH₃ sample was passed through the catalyst 1001 heated to 250°C shown in Figure 16, the dissociated water was passed through zeolite 1002 heated to 200°C, and the residual water was removed according to low-temperature purification 1003. The results of measurement by Q-MS are shown in Figure 17. The concentration of water content in unpurified AsH₃ was about 34 ppm. The concentration of water content in AsH₃ passed through the catalyst and zeolite was 0.8 ppm. Moreover, the concentration of water content in AsH₃ subjected to low-temperature adsorption was decreased to 0.1 ppm.

### Example 7

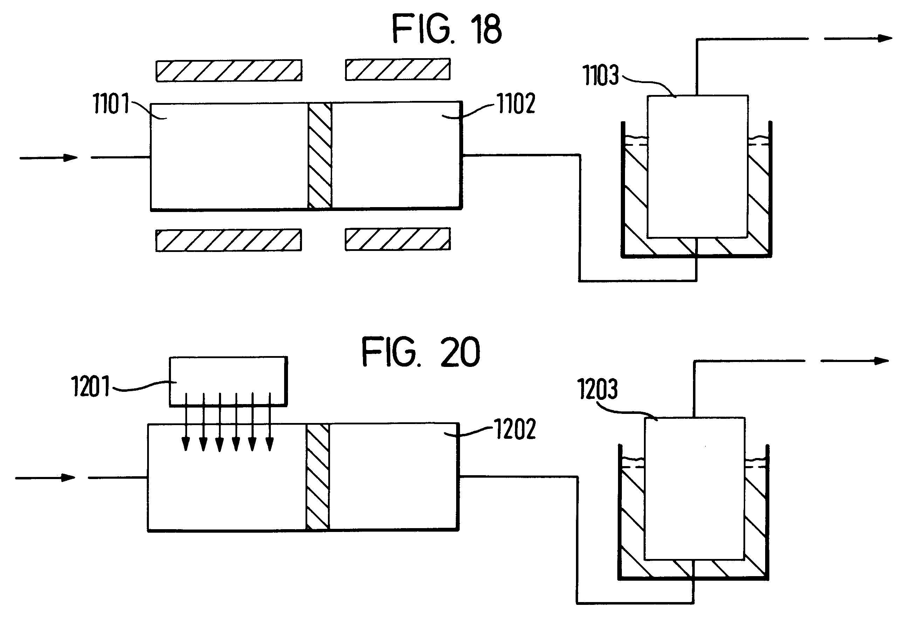

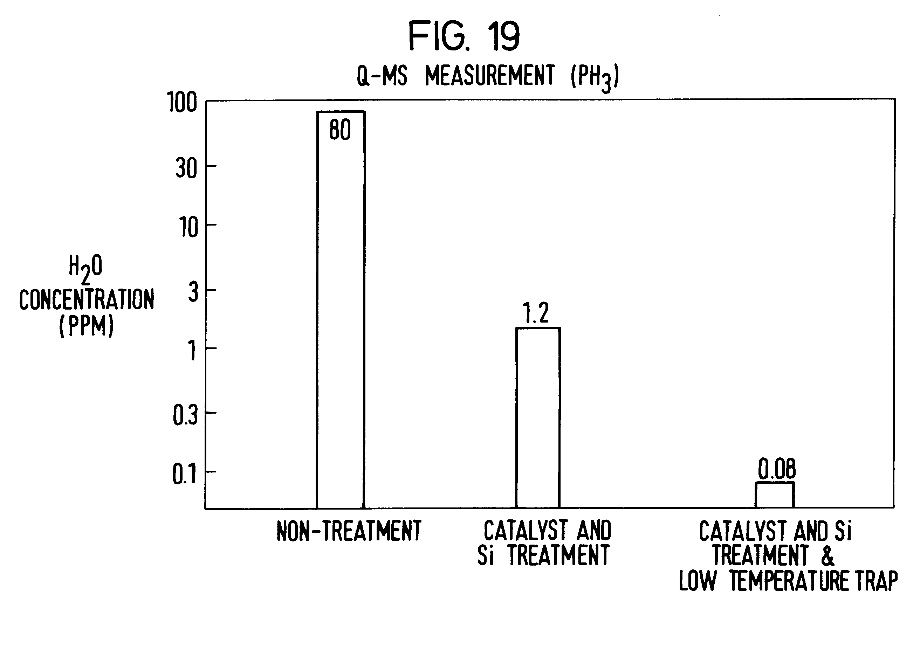

This example shows the dissociation of a water molecule associated with a PH₃ gas molecule by means of a dissociation pipe containing a palladium (Pd) catalyst, passing the dissociated water content through Si powder heated to about 200°C or more so that he dissociated water content should not be reassociated by the formation of an oxide film, and further removing water according to a low-temperature adsorption method, and a schematic view of the purification is shown in Figure 18. A 100% PH₃ sample was passed through a catalyst 1101 heated to 250°C, the dissociated water was passed through Si powder 1102 heated to 200°C, and the residual water was removed according to low-temperature purification 1103. The results of measurement by Q-MS are shown in Figure 19. The concentration of water in unpurified PH₃ was about 80 ppm. The concentration of water in PH₃ passed through the catalyst and Si was 1.2 ppm. Moreover, the concentration of water in PH₃ subjected to low-temperature adsorption was decreased to 0.08 ppm.

### Example 8

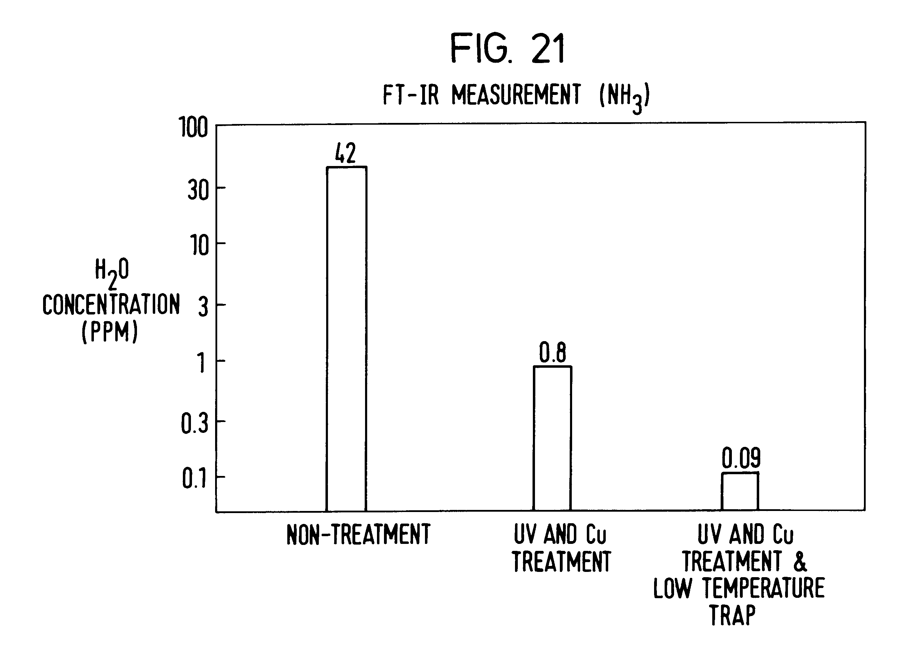

The example shows the dissociation of a water molecule associated with an ammonia (NH₃) gas molecule by irradiation by means of an ultraviolet lamp, passing the dissociated water content through Cu powder heated to about 200°C or more so that the dissociated water content should not be reassociated by the formation of an oxide film, and removing the water content according to a low-temperature adsorption method, and a schematic view of the purification is shown in Figure 20. A 100% sample of NH₃ was passed through the ultraviolet lamp 1201, the dissociated water content was passed through Cu powder 1020 heated to 200°C, and the residual water content was removed according to low-temperature purification 1203. The results of measurement by FT-IR are shown in Figure 21. The concentration of water in unpurified NH₃ was about 42 ppm. The concentration of water in NH₃ was about 42 ppm. The concentration of water in NH₃ passed through the ultraviolet lamp and Al, Si or Cu was 0.8 ppm. Moreover, the concentration of water in NH₃ subjected to low-temperature adsorption was decreased to 0.09 ppm.

### Example 9

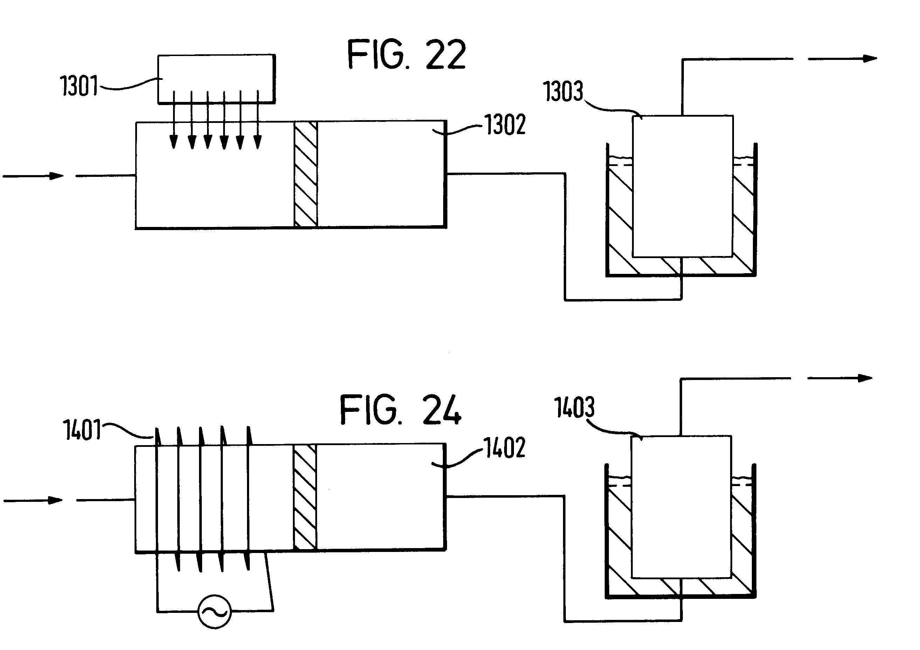

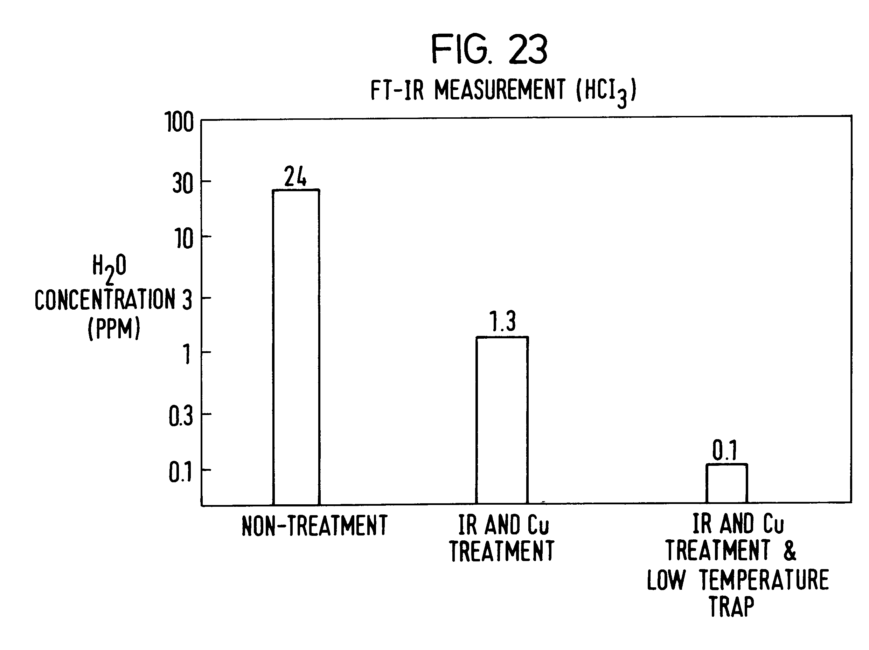

The example shows the dissociation of a water molecule associated with an HCl gas molecule by irradiation with an infrared lamp, passing the dissociated water through Cu powder heated to about 200°C or more so that the dissociated water should not be reassociated by the formation of an oxide film, and further removing water according to a low-temperature adsorption method, and a schematic view of the purification is shown in Figure 22. A 100% HCl sample was passed through an infrared lamp 1301 shown in Figure 22, the dissociated water was passed through Cu powder 1302 heated to 200°C, and the residual water was removed according to low-temperature purification 1303. The results of measurement by FT-IR are shown in Figure 23. The concentration of water in unpurified HCl was about 24 ppm. The concentration of water in HCl passed through the infrared lamp and Al, Si or Cu was 1.3 ppm. Moreover, the concentration of water in HCl subjected to low-temperature adsorption was decreased to 0.1 ppm.

### Example 10

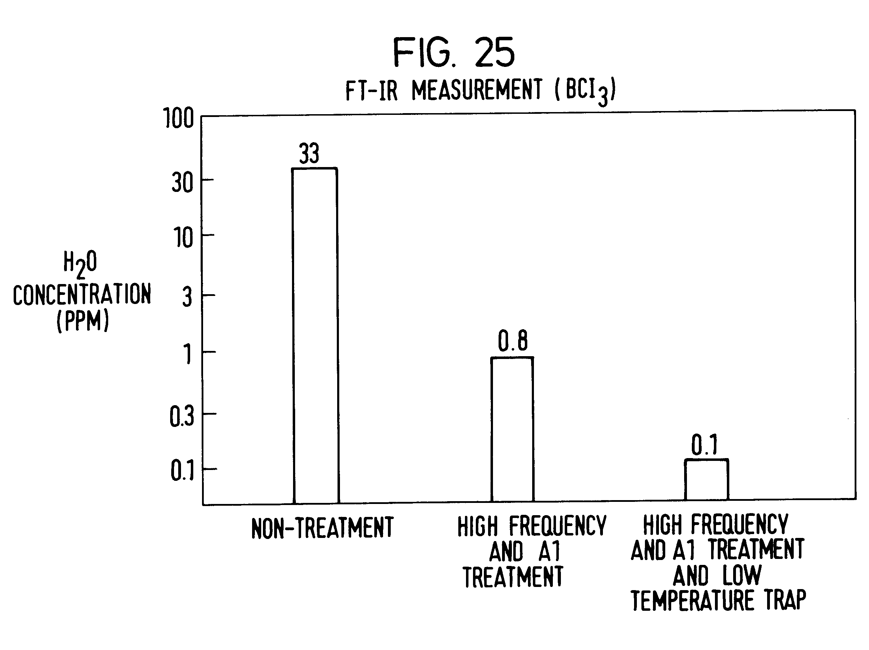

The example shows the dissociation of a water molecule bound to a BCl₃ gas molecule by applying high frequency radiation passing the dissociated water through Al powder heated to about 200°C or more so that the dissociated water should not be reassociated by the formation of an oxide film, and further removing water according to a low-temperature adsorption method, and a schematic view of the purification is shown in Figure 24. The 100% BCl₃ was passed through the high frequency radiation at 1401, the dissociated water was passed through Al powder 1402 heated to 200°C, and the residual water content was removed according to low-temperature purification 1403. The results of measurement by FT-IR are shown in Figure 25. The concentration of water content in unpurified BCl₃ was about 33 ppm. The concentration of water in BCl₃ passed through the high frequency and Al, Si or Cu was 0.8 ppm. Moreover, the concentration of water in BCl₃ subjected to low-temperature adsorption was decreased to 0.1 ppm.

## Claims

1. A method of removing water from a special gas having water associated therewith, comprising the step of:
i) introducing the special gas into a dissociation zone;
ii) dissociating the water from said special gas to form a substantially water-free special material gas; and
iii) separating the dissociated water from the substantially water-free special gas.

2. A method according to Claim 1 in which the special gas is selected from the group consisting of SiH₄, Si₂H₆, SiHCl₃, SiH₂Cl₂, SiCl₄, AsF₅, PF₅, NF₃, BCl₃, SF₄, WF₆, AsH₃, PH₃, NH₃, HBr, BCl₃, HCl, HF, SiH₃Cl and BF₃.

3. A method according to Claim 1 or Claim 2 in which step (ii) comprises selectively dissociating the associated water from the special gas in the presence of a catalyst at a temperature below the decomposition temperature of the special gas.

4. A method according to Claim 3 in which the temperature is in the range of from about 50°C to 300°C.

5. A method according to Claim 3 or Claim 4 in which the catalyst is one or more of NiO, CuO, Pt, Pd, zeolites and mixtures thereof.

6. A method according to any preceding claim in which step (ii) comprises applying ultrasonic waves to the special gas.

7. A method according to any preceding claim in which step (ii) comprises applying high frequency radiation to the special gas.

8. A method according to any preceding claim in which step (ii) comprises applying ultraviolet rays to the special gas.

9. A method according to any preceding claim in which step (ii) comprises applying infrared rays to the special gas.

10. A method according to any preceding claim in which step (iii) comprises reacting the dissociated water with a water-reacting substance to form an oxide of the water-reacting substance.

11. A method according to Claim 10 in which the water-reacting substance is one or more of Al, Cu, Si and mixtures thereof.

12. A method according to any preceding claim in which step (iii) comprises passing the dissociated water through at least one adsorbent bed under conditions such that the dissociated water does not reassociate with the substantially water-free special material gas.

13. A method according to Claim 12 in which the adsorbent is a molecular sieve.

14. A method according to Claim 12 or Claim 13 in which step (iii) comprises passing the dissociated water through a plurality of adsorbent beds.

15. A method according to any preceding claim in which step (iii) comprises distilling the dissociated water under conditions such that the dissociated water does not reassociate with the substantially water-free special material gas.
